# EUROPEAN PATENT SPECIFICATION

(11) **EP 3 920 833 B1**
(45) Date of publication and mention of the grant of the patent: **24.04.2024**
(21) Application number: 20707518.5
(22) Date of filing: 05.02.2020
(51) Int. Cl.: A61C 3/025

(54) **A CLEANING POWDER DEVICE FOR USE IN A DENTAL PRACTICE**
REINIGUNGSPULVERVORRICHTUNG ZUR VERWENDUNG IN EINER ZAHNARZTPRAXIS
DISPOSITIF DE POUDRE DE NETTOYAGE À UTILISER DANS UN CABINET DENTAIRE

(30) Priority: 06.02.2019 IT 201900001691
(43) Date of publication of application: 15.12.2021
(73) Proprietor: Mectron S.p.A., 16042 Carasco GE (IT)
(72) Inventor: CUNEO, Stefano, 16147 Genova (IT); DE FAVERI, Sara, 16039 Sestri Levante (Genova) (IT); BIANCHETTI, Fernando, 16043 Chiavari (Genova) (IT); LIONETTI, Massimo, 16039 Sestri Levante (Genova) (IT)
(74) Representative: Soldatini, Andrea
(86) International application number: PCT/IB2020/050922
(87) International publication number: WO 2020/161642

(56) References cited:
- EP-A1- 2 590 592
- US-B2- 6 416 321

## Description

### Technical field of the invention

The present invention relates to a cleaning powder device for use in dental practice, in particular of the type dispensing a mixture of air and abrasive powder, possibly together with a water jet.

### Background of the invention

Cleaning powder devices are used in the dental field typically to remove deposits and pigmentations during dental care. They are also used for the preparation of surfaces before a fluoride treatment, before teeth whitening, before the application of seals, before the placement of restoration material, before placing the so-called orthodontic "brackets", before bonding or cementing inlay/onlay prostheses, crowns or coatings.

These cleaning devices perform a superficial removal of deposits by dispensing a pressurized jet of air and abrasive powder. In general, the same instrument also administers a flow of water through a channel that is separate from the air channel and having a dispensing outlet adjacent or externally concentric to the air channel. The known powder cleaners are presented in the form of a handpiece that can be grasped by an operator and can be connected to the sources or connectors of compressed air and water generally present in dental laboratories.

A well-used type of known device comprises a pair of elongated arms, in particular one proximal to the operator which houses the connectors for the aforementioned air and water connections and a distal one which ends with the dispensing outlets on the patient. Between these arms there is an intermediate chamber, generally spherical or cylindrical, which has an access to allow the loading of the powder inside the chamber. The compressed air is conveyed into the aforementioned intermediate chamber, inside which a turbulence is generated which causes the air to be mixed with the powder. The higher pressure inside the chamber with respect to the external environment therefore causes the air-powder mixture to exit from the intermediate chamber through a special channel in the dispensing direction to the patient.

In particular, according to a recent solution proposed by the same applicant (Italian patent application 102017000026895), a partializer of the air flow at the inlet to the intermediate chamber for the containment of powder and air-powder mixing is used, this partializer being therefore arranged upstream with respect to the mixing process. In this way, it is possible to use different types of powder, in terms of mechanical properties and size of the granule, in the same device. In fact, the optimal mixing conditions can be obtained precisely by modifying the flow rate of air entering the intermediate chamber and therefore the fluid dynamic parameters of the turbulence that is generated inside the chamber itself.

In the cleaners according to the prior art, a powder refilling operation is required inside the intermediate containment and mixing chamber. The powder must be introduced into the chamber by means of a flask, generally in the shape of a bottle, within which the powder is supplied and care must be taken not to overfill the chamber, which would preclude proper mixing. If the user wants to replace the powder with one of a different type, the refilling operation first makes it necessary to empty the powder that is still remaining inside the chamber and only afterwards it can be refilled. The procedure for powder replacement can discourage the actual use of powders of different sizes inside the same cleaner, thus nullifying the usefulness of the flow partializer.

During the filling operation it is also possible that foreign bodies end up inside the intermediate chamber which might preclude the correct operation of the device or constitute a sanitary problem.

A known type of cleaning powder device is e.g. disclosed by US6416321.

### Summary of the invention

The object of the present invention is to provide a cleaning powder device of the type referred to above, which allows a simplified filling operation, as well as the operation of replacement of the abrasive powder with a different type.

A further object of the present invention is to provide a device of the aforementioned type, which offers greater guarantees of prevention with regards to the presence of foreign bodies inside the chamber, which bodies might preclude the correct operation of the device or constitute a sanitary problem.

These objects are achieved with the powder cleaner whose essential characteristics are defined by the first appended claim. Other important additional characteristics are the subject matter of the dependent claims.

### Brief description of the drawings

The characteristics and advantages of the powder cleaner according to the present invention will become apparent from the following description of an embodiment thereof, given by way of a non-limiting example with reference to the appended drawings in which:
- figure 1 shows a side view of a cleaning device with a removable capsule containing abrasive powder mounted thereon;
- figure 2 shows a view from a proximal or rear side of the cleaning device, without capsule;
- figure 3 shows a partial section of the device taken along line III-III of figure 2, in a condition with the capsule mounted (but not locked);
- figure 4 shows, sectioned like in figure 3, the capsule isolated from the device;
- figure 5 is a partial section of the device taken along line V-V of figure 2;
- figure 6 shows an axonometric view of a region of the device, with parts omitted for the sake of illustrative clarity, where the capsule is received, with two lock and release buttons of the capsule in a closed or locking position;
- figure 7 shows in isolation, still in axonometry, a guide cage for the lock and release buttons, omitted in the previous figure;
- figure 8 still shows the mounting region of the capsule, and still in axonometry from a different angle, with different omitted parts with respect to figure 6 to better illustrate a system for partializing the air flow of the device; and
- figure 9 shows the device sectioned along lines IX-IX of figure 1.

### Detailed description of the invention

With reference to said figures, it is possible to observe a powder cleaner according to a preferred embodiment of the invention. The cleaner is intended for use in a dental practice, in particular for dental cleaning aimed at eliminating deposits or for other applications as mentioned previously. The cleaner mainly comprises:
- a main arm 1, elongated along a main longitudinal axis (X);
- a secondary arm 2, elongated along a secondary longitudinal axis (Y), incident with respect to said main axis (X);
- a pneumatic circuit formed in said primary 1 and secondary 2 arms.

The cleaning powder device is configured as a whole as a handpiece, so that it can be grasped by an operator at the secondary arm 2 and/or the main arm 1. Advantageously, a coating sheath 9 made of an anti-slip material such as silicone can be arranged at the joint between the main arm 1 and the secondary arm 2 so as to improve the user's grip on the handpiece. Preferably the sheath 9 can be fitted in a reversible fashion to allow easy replacement and also aesthetic customization options.

The main arm 1 and secondary arm 2 are defined by an external box-like casing 100 of the device, of a load-bearing nature, made of one or more pieces and housing, among others, the components described below, without prejudice to the fact that the components, although present but not specifically related to the present invention, are not mentioned, being of the traditional type or in any case of obvious configuration for a person skilled in the art.

The secondary arm 2 is configured as a connector to a source of compressed air, in particular by means of an airtight connection 20 per se of a known type. The connection 20 constitutes the inlet portion of the pneumatic and possibly hydraulic circuit of the cleaning device. The main arm 1 has a distal end portion 3 shaped like a dispensing spout or nozzle and configured for dispensing a mixture of air and powder to a patient, in ways that will be explained shortly. The distal portion 3 is the terminal portion of the pneumatic circuit of the cleaning device. Preferably, the distal portion 3 is inclined with respect to the main axis X. In the present embodiment, a jet of liquid is also dispensed through the distal portion 3 through the hydraulic circuit which evolves between the secondary arm and the distal portion 3 of the main arm 1 in a known way and not illustrated or described, being moreover extraneous to the scope of the present invention.

The main arm 1 also has, at the end which is axially opposite to the distal end, a proximal end portion 4. Preferably, as in the illustrated example, the cross section of the arm 1 progressively widens from the distal to the proximal end, so that the arm is configured substantially according to a cone the proximal end of which corresponds to a base region. The joint of the secondary arm on the main arm occurs at an intermediate position between the distal and proximal end portions, however in a position closer to the proximal end 4. An inclination of the secondary arm 2, or more precisely of the relative axis Y, forming an acute angle with the proximal portion 4 of the main arm, like in the example illustrated, can make the handling of the device more ergonomic, favouring a safer control.

The proximal portion 4 of the main arm 1 comprises reversible coupling means adapted to be reversibly connected to complementary reversible coupling 72 of a capsule containing the powder for dental treatment 7 and substantially shaped like an ampoule with a body 71, for example spheroidal or globular (but in general of any geometry, also polyhedral),defining a cavity 70, and a tubular neck 73 projecting from the body 71 according to a neck axis X', on which the coupling means 72 are formed (described in detail below) and which ends with a mouth adapted to put the cavity 70 in communication with the outside.

The coupling means on the proximal portion 4 typically comprise a seat 40 which accommodates the neck 73 of the capsule 7, with coaxial coupling, i.e. by making the neck axis X' of the capsule coincide with the main axis X of the arm 1.

A cannula 5 extends, still along the main axis X and inside the seat 40, for the extraction of the powder from the capsule, equipped with a free portion 5a projecting beyond the proximal end of the main arm, and is adapted to be inserted in an airtight fashion within said capsule through the mouth of the neck and within it. The cannula 5, continuing beyond the seat towards the distal end portion of the arm 1, defines part of the pneumatic circuit of the cleaning device in that it is configured to introduce compressed air into the cavity 70 of the capsule (for this purpose the walls of the body 71 being suitable to withstand an internal operating pressure of up to 5 bar, with safety sizing at around 10 bar), to create a turbulence inside so as to allow air and powder to be mixed, and to convey said mixture of air and powder towards said dispensing nozzle. The cannula 5, for this purpose, comprises two channels that communicate pneumatically with the inside of the capsule, according to what will be described in greater detail below; in particular, said channels comprise an inlet channel 51 for ejecting compressed air into the capsule (the air flow being received through the connection 20), and a channel 52 for drawing the air/powder mixture from the capsule.

Going more into details about the preferred construction solutions, and starting from the capsule 7, the neck 73 preferably develops starting from a shoulder plane 74 perpendicular to the neck axis X'. The coupling means 72 of the neck 73 provide, on an external surface of the neck, retaining protrusions comprising, in succession moving away from the shoulder plane 74, a retaining lip 75, developing on a plane orthogonal to the axis X', and at least one retaining tooth 76 at a certain axial distance from the lip 75 and near the mouth of the neck.

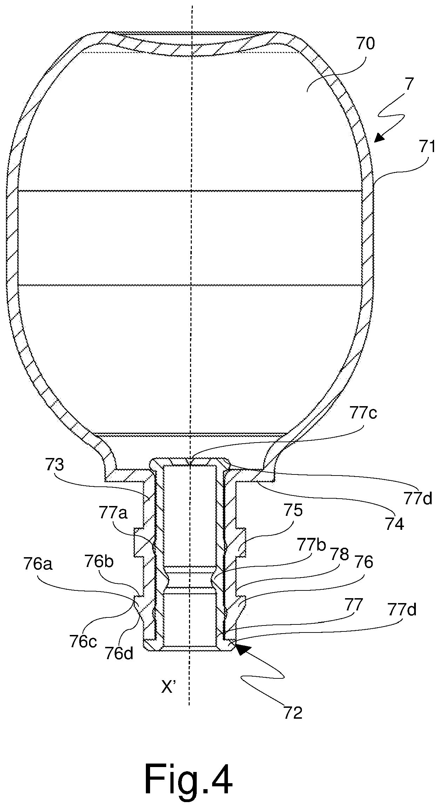

The retaining lip 75 is substantially a rectangular profiled ridge, radially projecting outwards with respect to the neck. A retaining tooth has a profile, seen according to a diametrical section of the capsule like that of figure 4, as a rectangle trapezoid, defining five faces, two lateral faces 76a parallel to each other, a rear face 76b orthogonal to the axis X' and facing the capsule body, an oblique front face 76d and finally an external face 76c corresponding to the development of the minor base of the rectangle trapezoid. Preferably, like in the example, a plurality of teeth 76 equally spaced is provided in the circumferential sense of the neck, even more preferably four in number, whose function will be made clear hereafter.

To ensure the airtightness between neck 73 and external surface of the cannula, the capsule also comprises a tubular elastomer sleeve 77 of calibrated hardness, inserted by mechanical interference with the internal surface of the neck 73 of the capsule, after the latter has been loaded with powder. The aforementioned sleeve preferably comprises one or more circumferential ribs 77a, 77d on the surface in contact with the neck, preferably three in number, which increase the safety of the airtightness and prevent the axial sliding between the sleeve itself and the internal walls of the neck 73, retaining the sleeve in place both during the insertion and extraction of the cannula 5. The external ribs preferably comprise one or more ribs 77a in an intermediate position, and two end ribs 77d suitable for axially abutting on the outside of respective ends of the neck 73. One or more ribs 77b are also provided on the surface facing the axis X', i.e. internally, adapted to further strengthen the airtightness between the sleeve 77 and the external surface of the cannula 5 of the cleaning device, in a portion of shaft 81 which will be discussed shortly.

The sleeve 77 is closed at the internal end, which is substantially at the shoulder plane 74, by a pre-cut diaphragm 77c which seals the cavity 70 from the external environment. The diaphragm is arranged to yield following the breaking action exerted by the cannula 5 intended to draw the contents of the capsule, when it is inserted through the other open end of the sleeve 77. The sealing can also be realised or made even safer by a metal-based film applied on the neck, for example by thermo-adhesion, to close the end mouth.

Returning now to the actual cleaning device and to the relative reversible coupling means, they comprise an abutment surface 102, formed by a ring nut 101 with screw engagement on the proximal end of the arm (or more precisely of the relative box-like casing), adapted to provide an axial abutment to the shoulder surface 74 of the capsule and to axially tighten the internal components which will be described below.

A generally hollow cylindrical transmission member 30 is arranged within the seat 40, rotatably about the axis X. The member 30 surrounds the cannula 5, and at the same time provides a housing in which a terminal part of the neck 73 is inserted. The transmission member 30 causes a stop in the torsional sense relative to the capsule thanks to a proximal end profile 31 adapted to be engaged by a conjugated conformation formed on the capsule itself. In the present case (by way of example) this conformation is represented by the crown of teeth 76 and the proximal end profile 31 of the member 30 by square indentations which also offer a depth stop to the insertion of the teeth 76. In the engaged position, due to the conformation of the square indentation profile 31, the retaining lip 75 remains spaced from the profile itself, leaving a circumferential groove 78 free and open between the crown of teeth 76 and the same lip 75.

The reversible coupling means further comprise at least one movable locking member suitable for being engaged and disengaged radially with respect to the neck 73 to respectively axially retain the capsule in a locking or closing position, and instead allow its insertion and extraction movement, in an open or release position.

Advantageously, as in the depicted embodiment, the at least one movable member consists of at least one locking ring, preferably two rings 21 and 22 movable radially on respective movement planes orthogonal to the main axis X. In the open position the rings are mutually more centred (with respect to the axis X) and allow the insertion of the capsule. In the closed position, displaced radially, the rings are instead markedly off-centred with respect to the axis X, becoming inserted - along a part of their development - within the groove 78, engaging with the neck 73 and in particular with the lip 75; this clearly occurs when the capsule is inserted inside the seat 40, and attains the result of preventing the capsule from coming out (due to the pressure inside it or to gravity), but allowing the rotation of the capsule around the axis X.

Each ring is kept in the off-centred position by elastic return means (not shown), the resistance of which is overcome by a user, should he wish to open the passage so as to be able to insert or extract a capsule, exerting pressure on the rings towards the release position.

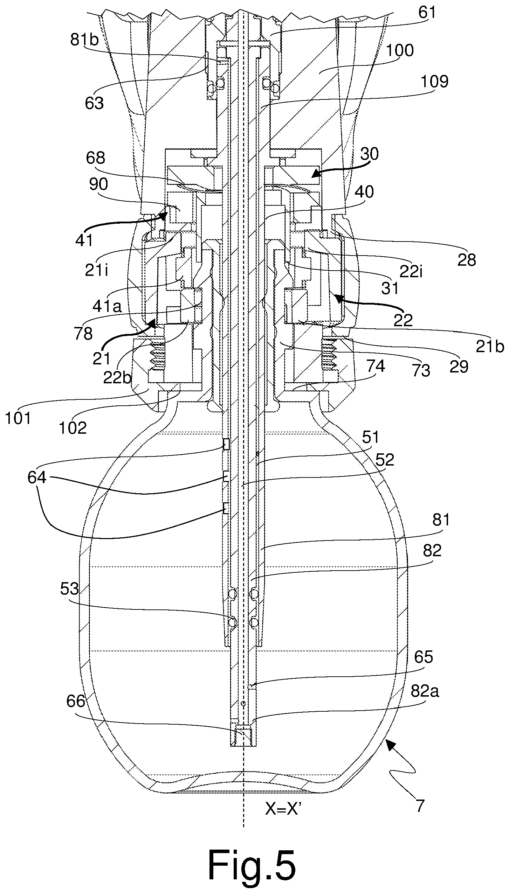

More specifically, the rings 21 and 22 comprise in the illustrated embodiment a substantially semicircular structure 21c, 22c lying on the respective movement planes, completed by two arms 21d, 22d which linearly extend the structure 21c, 22c, and end with an external abutment face 21e, 22e, connecting to an actuating button 21a, 22a. When the ring 21 or 22 is positioned inside the cleaner, the actuating button 21a has a main development along a direction parallel to the main axis X and offers its actuating surface exposed through a relative window 28 (shown in figure 5) which splits laterally the casing 100, in the main arm, at the level of the seat 40. The two rings are superimposed along the axis X and have a mirrored arrangement with respect to an axial plane, preferably the plane XY, whereby the two buttons are opposite to each other, and the extreme portions of the semicircular structure (those that are more distant from the respective buttons) that take charge of exercising the lock are likewise opposite to each other.

The button 21a, 22a also preferably comprises a central rib 21f, 22f for tactile location of the pressure point, always developing along a direction parallel to the axis X, and a stroke end tooth 21i and 22i, still protruding along the axis X to stop the button, and therefore the ring, in the locking position against the casing 100. In a position opposite to the button 21a, 22a, each ring 21, 22 further comprises respective teeth 21b, 22b which develop longitudinally, that is, again, along a direction parallel to the axis X. In particular, in the two rings the respective teeth 21b, 22b protrude, in mutually inverse axial directions, from the semicircular structure 21c, 22c, so as to be accommodated within the groove 78, in diametrically opposite points, and in contact both with the retaining lip 75 and with the rear faces 76b of the teeth 76 (see in particular Figure 5, still with the rings in the open position), thus improving stability and firmness of the locking provided by the rings.

The two rings 21 and 22 are inserted and guided inside a cage 41, shown isolated in detail in figure 5. This cage 41 has a hollow cylindrical shape and is fixedly mounted within the seat 40. The central axis of this cage 41 is substantially coincident with the axis X. The displacement of the rings 21 is actuated, from the locking position to the open position, by a user's compression of a flexible external cover 29 which internally comes into contact with the external surface of the ribs 21f, 22f of the buttons; the simultaneous compression of the buttons 21a 22a by the user causes the opening of the locking system provided by the two rings 21, 22. The already mentioned elastic return means, such as for example a spring, can be arranged between the inner face of the button 21a and a stop 41a which protrudes from a surface 41b of the cage 41.

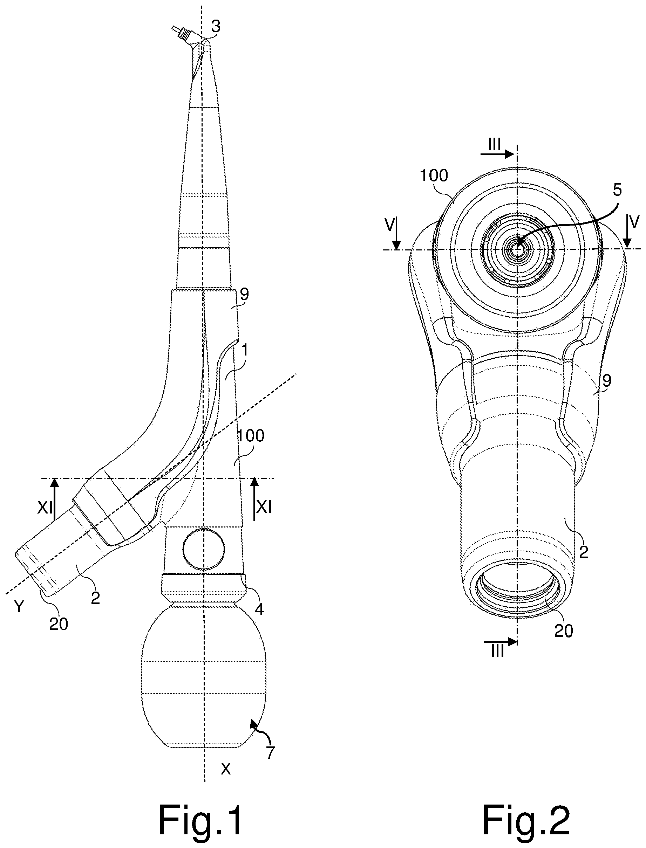

Coming back now to the cannula 5, as mentioned it is adapted to penetrate inside the capsule passing through the elastomer element 77; preferably, its two already mentioned channels are concentric. The external annular channel 51, having the function of introducing the pressurized air inside the capsule, is defined between an external surface of a fixed tubular inner core 82 and an internal surface of an external shaft 81 which according to an advantageous solution is rotatable. The inlet of the pneumatic circuit of the secondary arm 2, through a circuit connector branch 54, is adapted to communicate with the external channel 51 through at least one passage 81b formed on the shaft 81. The core 82 then internally defines the internal channel 52 which reaches the distal portion 3 and the relative dispensing nozzle, through obvious configurations of the traditional type and not shown, as is also not shown or described, except for the water inlet 55 visible in figure 2, of the liquid dispensing system which can be integrated into the cleaning device.

The shaft and core assembly defines the cannula 5, with the shaft 81 having a smaller axial extension, leaving the core 82 exposed over a free end segment 82a.

The core 82, represented only in part, is preferably made in a single piece to form a single channel, the already mentioned inner channel 52, which communicates the capsule to the nozzle of the distal portion 3.

To provide structural support to the external surface of the cannula 5, i.e. in practice the external surface of the shaft 81, in the present embodiment a further internal tubular structure 61 is provided, fixed inside the casing 100, accommodated within a passage 109 which axially extends the seat 40 with a reduced section towards the distal end, up to the dispensing nozzle. The shaft 81 partially extends within the passage 109, starting from the internal structure 61, with which it is rotatably engaged.

In the seat 40, the shaft 81 penetrates the transmission member 30, engaging therewith, to receive rotation thereof, due to a toothed profile 81f formed on the external surface of the shaft 81 and which meshes with corresponding teeth 32 formed at the distal axial end of the transmission member 30, i.e. at the opposite end with respect to the square indentation profile. Thanks to the shape coupling of the teeth 32 with the toothed profile 81f it is therefore possible to control the rotation of the shaft 81, with the capsule in the mounted condition, from a rotation imparted by the user to the capsule itself, through the transmission member 30 to which the shaft is made rotationally integral. This rotation advantageously has the effect of partializing the flow rate of air exchanged between the circuit branch 54 and the external channel 51 through the at least one passage 81b formed on the shaft 81, by means of the construction as described hereafter.

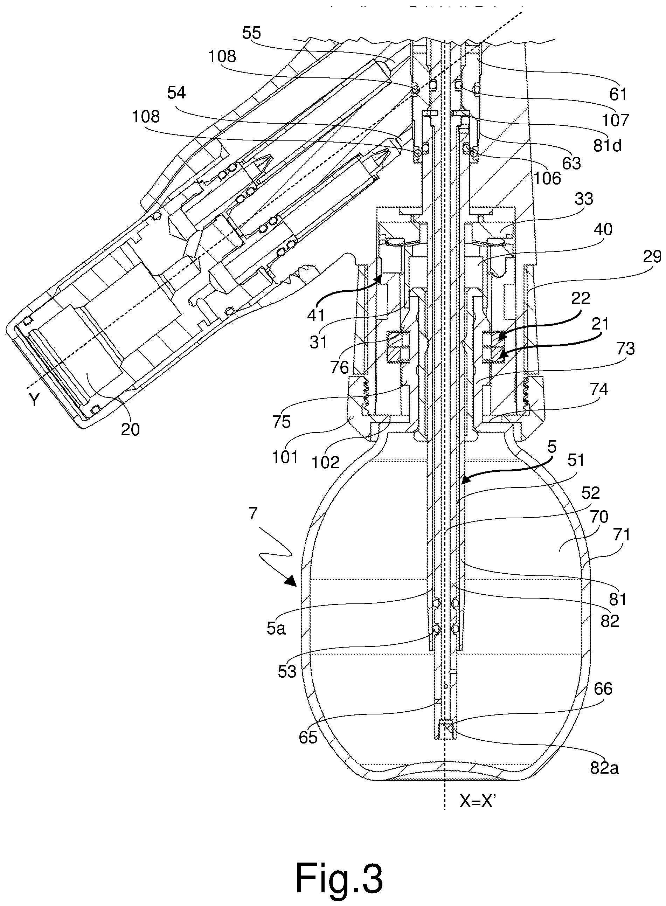

Both channels 51, 52 are closed at the proximal ends through air-tight seals. In particular, with reference to figures 3 and 5, the seals include O-rings 53 arranged between the external surface of the core 82 and the internal surface of the shaft 81 at the level of the end 81a of the shaft, which ensure the air-tight properties, anyway allowing the mutual rotation between shaft and core. A sealing plug 66 seals the internal channel 52 at the end of the core 82.

The external annular channel 51 is closed at the distal end by a lip 81d protruding externally from the outer surface of the core 82. The airt-tight property of this closure is ensured by an O-ring 107 placed between the external surface of the distal terminal portion of the shaft 81 and the structure 61, and by a further O-ring 106 comprised between the external surface of the proximal terminal portion of the core 52 and the structure 61.

The inlet of the pneumatic circuit of the secondary arm 2, through the already mentioned circuit branch 54, communicates with an annular distribution chamber 63 defined between the structure 61, which wraps the shaft 81, and the wall of the passage 109, in a region which corresponds with the joint between the two primary and secondary arms. The air-tightness of the coupling between structure 61 and casing 100 is ensured by a pair of further O-rings 108.

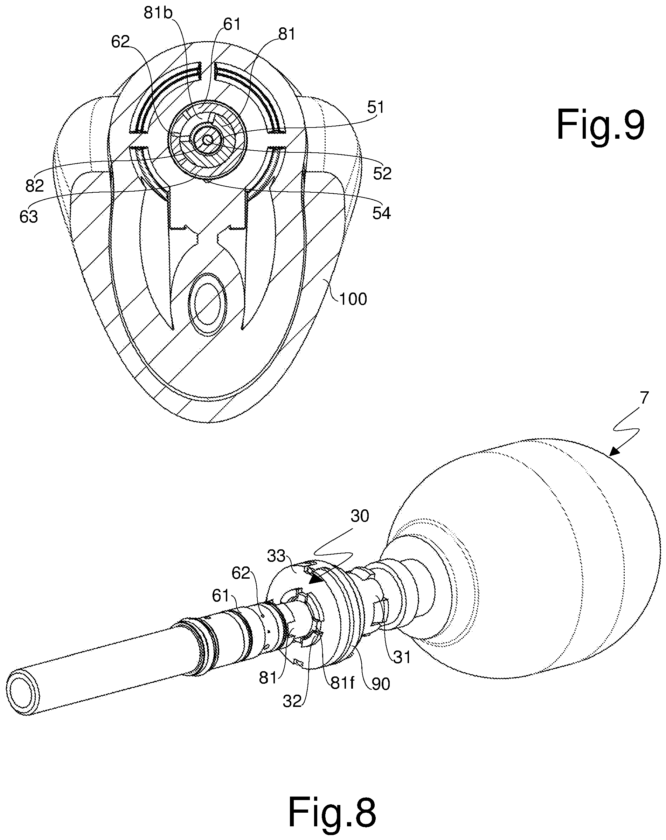

The external annular channel 51 is adapted to receive air through one or more radial intake apertures 62 formed in the internal structure 61, when the at least one inlet passage 81b formed in the shaft 81 is in a position that corresponds to at least one of said apertures, depending on the rotation of the shaft itself. This rotation is clearly capable to partialize the air flow by shutting, with the solid part of the shaft, an adjustable number of apertures 62, until it completely blocks the entry of air when (as in figure 9) the apertures are all closed by the solid side of the shaft.

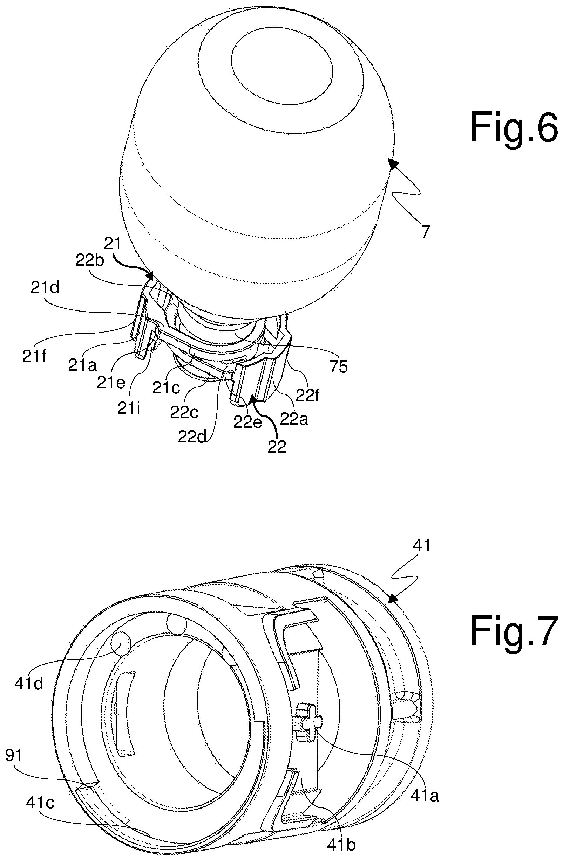

In order to stabilize the different partialization positions, the mounting arrangement of the transmission member 30 can advantageously provide, like in the present example, at the distal end, a disk-shaped flange 33 which rotates an annular bushing 90 at its proximal face. The bushing 90 is in turn coupled with the cage 41 by means of a slider formation 91 (shown through an outline thereof in figure 7) which, inserted in a stroke limiting guide 41c formed in a distal face 41e of the cage 41, rotates within this guide. The coupling of slider 91 and guide 41c limits the rotation between two stroke-end stops of all the elements which are, as mentioned, moved by the user by the rotation of the capsule 7. This stroke will go from a closed flow position to a maximum opening position when all the apertures 62 are in communication with the passage 81b.

The cleaning device further comprises a system to hinder the rotation at a plurality of discrete angular positions, suitable for offering tactile sensory response at the attainment of these positions, corresponding to incremental variations of the flow rate of air entering the external annular channel 51. For this purpose, in the illustrated example, the element 41 comprises a plurality of cavities 41d, for example hemispherical, arranged over the circumferential surface of the face 41e. These cavities 41d are adapted to selectively couple with a protrusion (not visible in the figures) emerging from the corresponding face of the bushing 90 which, in assembly, comes into contact with the face 41e, producing, when the coupling takes place, a snap feeling. Between the flange 33 and the bushing 90 there is preferably an elastic-response pushing member 68 which pushes the bushing 90 to the contact with the cage 41, promoting and stabilizing the engagement of the protrusion in one of the cavities 41d, at the same time allowing the minimal deformation which is required to the bushing itself when the protrusion exits from the cavity 41d, following a rotation of the capsule by the user. The cavities 41d are preferably in number equal to possible incremental increases of the air flow which enters into the channel 51 from the chamber 63. Obviously, mirrored solutions can be adopted in an equivalent way (for example by reversing the position of the protrusion/s cavities).

From the external annular channel 51, the air is adapted to flow into the capsule from one or more outlet holes 64 positioned on the wall of the shaft 81, in the region which corresponds to the already mentioned free portion 5a of the cannula 5. Preferably the holes 64 are arranged according to a geometry which comprises rows of holes according to a circumferential direction, arranged in series starting from the part of the free portion of cannula 5a that is the closest to the cleaning device, the first rows having a greater number of holes. For example, a first row comprises three holes, a second one two and subsequent two rows a single hole per row.

A yet further plurality of orifices 65 is formed on the segment 82a of the core 82, communicating the interior of the capsule 7 and the internal channel 52, thus allowing the exit of the air-powder mixture and its feeding towards the nozzle of the cleaning device. These orifices 65 are preferably arranged over the entire circumference on the external surface of the segment 82. In the illustrated solution, they follow a spiral-like trace.

The distribution geometries of the holes 64, 65 can obviously vary with respect to those represented here, which however can offer advantages in terms of effectiveness of the pneumatic circulation.

The operating behaviour of the handpiece according to the invention can be easily understood from the previous description.

To summarize, a user must first load a capsule 7 onto the device. For this purpose, he must press the cover 29 at the buttons 21a 22a, exerting a force on the elastic return means so that the rings 21 and 22, eccentric at rest, assume the most centralised position. This action allows the tubular neck 73 of the capsule 7 to be inserted inside the seat 40 of the cleaning device, taking care to make the cannula 5 penetrate inside the mouth of the neck 73 by breaking the diaphragm 77c which seals the cavity 70 of the capsule. The user will also take care to insert the teeth 76 into the corresponding indentations 31. When the grip of the fingers on the buttons is released, the return springs bush the rings back to the eccentric position, locking the capsule.

The user must therefore select the flow rate of air that will be used according to the type of powder contained inside the capsule itself. The selection of the flow rate is made by rotating the capsule around the main axis X of the device. The rotation of the capsule, through the coupling of indentations 31 and teeth 76, rotates the member 30 along. In turn, it transmits the rotation to the shaft 82, through the coupling of the teeth 32 with the toothed profile 81f. By rotating integrally with the capsule, the shaft 81, through the inlet passage 81b, can release in succession the three air intake apertures 62 which increase or decrease, depending on whether they are in communication with the annular channel 51 or shut by the external wall of the shaft 81, the flow rate of air that will flow inside the capsule when the pneumatic circuit is in operation.

When the pneumatic circuit starts operating, through the channel 54 in the secondary arm 2 the air reaches the chamber 63 in the primary arm 1. From here, if at least one of the intake apertures 62 is in communication with the inlet passage 81b, the air enters the external annular channel 51. By running in the external channel 51, the air reaches the capsule 7 and enters the cavity 70 through the holes 64. The free surface of the agglomerated powder mass contained inside the capsule is lapped by the air stream, which raises and transports the most superficial layer by suspension, in combination with a general turbulent movement induced by the holes 64 which are below the free surface. Through the orifices 65, the air-powder mixture thus formed enters the internal channel 52 and running along it, it entirely comes out from the nozzle of the distal portion 3.

It will be understood that the invention has the advantage of providing a cleaning powder device which allows a less laborious refilling operation of the powder, in that it is simply necessary to extract the exhausted capsule and insert a fresh, fully loaded capsule. Obviously, the solution lends itself to the supply of capsules as consumables, disposable (obviously without prejudice to the possibilities of recycling), but possibly also reusable for refilling (also with a deposit-return system).

Advantageously, the operation of replacing the abrasive powder with a different type is also simplified, encouraging the use of powders of different size.

Another advantage of the cleaning device according to the invention is that of offering greater guarantees of prevention with respect to the presence of foreign bodies inside the container where air and powder are mixed, thanks to the possibility of using capsules filled with industrial processes which guarantee more safety.

In the illustrated embodiment, a flow rate regulation mode is also successfully integrated with the coupling and release system of the capsule, and it also has an advantage from the point of view of ease of handling by the user.

In an alternative embodiment of the invention, the device can in any case be made, without prejudice to the engagement system between device and capsule and relative pneumatic circuitry, without a flow partializer system managed by the same rotation of the capsule, such as the one described above. Such a simplified version can be used, for example, while still achieving a substantial part of the advantages of the invention, to realise a lower range device, capable of using only one more common type of powder, or to avail oneself of partialization systems according to different known techniques, such as for example the one disclosed by the same applicant in the already mentioned Italian patent application 102017000026895.

It will also be understood that the reversible coupling system with ring locking described above, although advantageous, can make use of other mechanical interference locking systems, which can be released by manual intervention by the operator, according to what the expert skilled in the art will find as equivalent.

The materials used for the realization of the device according to the present invention will be those commonly used in the field for this type of application according to the specific requirements of lightness, resistance, tribological characteristics, etc. Likewise, the configuration of seals and other merely constructive details for anything not specifically mentioned above, will obviously be implementable according to obvious solutions for an expert skilled in the art and not directly related to the scope of the present invention.

The present invention has been described herein with reference to preferred embodiments thereof. It is to be understood that there may be other embodiments that relate to the same inventive core, falling within the scope of protection of the claims here enclosed.

## Claims

1. A cleaning powder device for use in a dental practice, comprising:
- a main casing arm (1), elongated along a main longitudinal axis (X) and comprising a distal end portion, configured as a nozzle (3) for dispensing a mixture of air and abrasive powder, and a proximal end portion (4) axially opposed to said distal end portion;
- a secondary casing arm (2), elongated along a secondary longitudinal axis (Y), incident with respect to said main axis (X) and configured as a connector (20) to a source of compressed air;
- a pneumatic circuit formed in said primary (1) and secondary (2) arms between said connector (20) and said nozzle (3);
wherein
- said main arm (1) comprises, on said proximal end portion (4), releasable coupling means for a powder containment capsule (7), said releasable coupling means comprising a seat (40) for inserting a neck (73) of said capsule (7);
- a free portion (5a) of a cannula (5), projecting along said main axis (X) from said proximal end portion (4) of said main arm, providing an insertion arrangement in an airtight fashion within said capsule;
- said pneumatic circuit comprising, inside said cannula (5), two concentric channels with respect to said main axis (X), of which an external channel (51) for the inlet of compressed air in said capsule (7), defined between an inner core (82) and an outer shaft (81) of said cannula, said external channel (51) being in communication with a connector branch (54) of said pneumatic circuit provided in said secondary arm (2) starting from said connector, through at least one passage (81b) formed in said shaft (81), and an internal channel (52) for drawing the air/powder mixture from the capsule, defined internally to said inner core (82), whereby said pneumatic circuit is configured inside said cannula to eject compressed air into the capsule, to create within it a turbulence allowing the mixing of air and powder, and to convey said mixture of air and powder towards said nozzle; wherein
- said shaft (81) has a shorter axial extension with respect to said core (82), leaving said core (82) exposed for a free end segment (82a), said segment (82a) comprising a plurality of orifices (65) for communication between said capsule and said internal channel (52), said shaft (81) comprising on its wall one or more air outlet holes (64) of air from said external channel (51), formed in a region corresponding to said free portion (5a) of the cannula (5), and wherein
- said releasable coupling means comprising locking means (21, 22) for said neck (73) of said capsule (7), suitable for being released by manual intervention of an operator, said locking means (21, 22) comprising at least one locking member radially movable within said seat (40) of said proximal end portion of said main arm, suitable for being engaged and disengaged with respect to said neck (73) in order to axially retain the capsule in a locking or closing position, and to allow its insertion and extraction movement, in an open or release position.

2. Device according to any of the claim 1, wherein said inner core (82) is fixed with respect to said main arm, and said outer shaft (81) is rotatably supported around said main axis, said releasable coupling means further comprising transmission means suitable for rotating said shaft (81) integrally with said capsule (7), said device further comprising an internal tubular structure (61) fixed within said main casing arm, housed within a passage (109) which prolongs axially, with reduced section width, said seat (40) towards said distal end portion, said shaft (81) extending partially within said passage (109), starting from said internal tubular structure (61), with which it is rotatably engaged, said internal tubular structure (61) defining, in cooperation with a wall of said passage (109), an annular distribution chamber (63), said chamber (63) being in communication with said connector branch (54) and comprising a plurality of radial intake apertures (62) adapted to allow the passage of air from said chamber (63) to said external channel (51) when said inlet passage (81b) of said shaft (81) is in correspondence with at least one of said openings (62) as a result of the rotation of the shaft, whereby the rotation of said shaft, imparted through said capsule is adapted to partialize the air flow received from said connector branch (54) through said at least one passage (81b).

3. Device according to claim 2, wherein said at least one locking member comprises two rings (21, 22) sliding radially on respective sliding planes orthogonal to said main axis (X), in said open and closed positions said rings being radially displaced, respectively, to a greater and lesser extent with respect to said main axis (X), each ring comprising a semicircular structure lying on the relative sliding plane and an actuating button having a surface exposed through a window (28) that laterally breaks said main arm at the height of said seat (40), the two rings having a mirrored arrangement with respect to a plane passing through said main axis (X), so that the two actuating buttons of the pair of rings are opposite each other, and, likewise, end portions of the semicircular structure are opposite to each other to carry out the locking action by inserting part of their length within a groove (78) formed in said neck (73) of said capsule (7), said rings being further provided with elastic means adapted to achieving, in the absence of actuation, the displacement of the rings towards said closed position.

4. Device according to claim 3, wherein respective teeth (21b, 22b) protrude, in mutually inverse axial directions, from said semicircular structures (21c, 22c), to accommodate within said groove (78), thus improving stability and firmness of the locking provided by the rings.

5. Device according to claim 2, wherein said transmission means comprise a hollow transmission member (30) arranged in revolving fashion around said main axis (X) within said seat (40) and around said cannula (5), said transmission member (30) having, at a proximal end, a proximal end profile (31) adapted to be engaged with a conjugate end conformation provided on said neck (73) of said capsule, and at a distal end, a plurality of teeth (32) engaging with a conjugated toothed profile (81f) formed in an outer surface of said shaft (81).

6. Device according to claim 5, wherein said proximal end profile (31) of said transmission member (30) is a profile with square indentations.

7. Device according to claim 5, wherein rotation hindering means are associated to said transmission member (31) at a plurality of discrete angular positions, said rotation hindering means being able to offer tactile sensory response at the attainment of said positions, said positions corresponding to incremental variations of the flow rate of air entering said external channel (51).

8. Device according to claim 7, comprising a guide cage (41) for said locking means, said cage (41) having a hollow cylindrical shape and being coaxially fixed within said seat (40), wherein said transmission member (30) comprises, at said distal end, a disc-shaped flange (33) bringing into rotation, on a proximal face thereof, a ring-like bushing (90), said bushing (90) comprising a slider formation (91), inserted in a stroke limiting guide (41c) formed in a distal face (41e) of said cage (41), said rotation hindering means comprising a plurality of cavities (41d) arranged over the circumferential surface of said distal face (41e) of said cage (41), adapted to be selectively coupled with a protrusion bulging from said bushing (90).

9. Device according to claim 8, further comprising, between said flange (33) and said bushing (90), an elastic-response pushing member (68) adapted to push said bushing (90) against said cage (41), promoting and stabilizing the engagement of said protrusion in one of said cavities (41d).

10. Device according to any of the previous claims, comprising a coating sheath (9) made of an anti-slip material such as silicone arranged, preferably in a reversible fashion, at least at a joint between said main arm (1) and said secondary arm (2).

11. A capsule (7) for containing abrasive powder, comprising releasable coupling means (72) complementary to said releasable coupling means of said main arm of the dental cleaning device according to any of the previous claims, said capsule comprising a body (71), defining a cavity (70), and a tubular neck (73) projecting from said body (71) according to a neck axis (X'), said capsule releasable coupling means (72) being formed in said neck, which ends with a mouth adapted to put said cavity (70) in communication with the outside, said neck (73) being adapted to be inserted within said seat (40) at said proximal end portion of said main arm with coaxial coupling, i.e. by making said neck axis (X') coincide with said main axis (X) of said main arm (1), said free portion (5a) of said cannula (5) penetrating said neck (73) through said mouth, wherein the capsule also comprises a tubular elastomer airtight sealing sleeve (77), inserted by mechanical interference with the internal surface of said neck (73) of the capsule (7), wherein said capsule releasable coupling means comprise a groove (78) formed circumferentially in an outer surface of said neck (73), adapted to be engaged by said releasable coupling means of said device.

## Patentansprüche

1. Reinigungspulvervorrichtung zur Verwendung in einer zahnärztlichen Praxis, umfassend:
- einen Hauptgehäusearm (1), der entlang einer Hauptlängsachse (X) langgestreckt ist und einen distalen Endabschnitt, der als Düse (3) zum Abgeben eines Gemischs aus Luft und Schleifpulver konfiguriert ist, und einen proximalen Endabschnitt (4) umfasst, der sich axial gegenüberliegend zu dem distalen Endabschnitt befindet;
- einen sekundären Gehäusearm (2), der entlang einer sekundären Längsachse (Y) langgestreckt ist, die in Bezug auf die Hauptachse (X) einfällt, und als Anschlussstück (20) zu einer Druckluftquelle konfiguriert ist;
- einen Pneumatikkreis, der in dem primären (1) und dem sekundären (2) Arm zwischen dem Anschlussstück (20) und der Düse (3) ausgebildet ist;
wobei
- der Hauptarm (1) auf dem proximalen Endabschnitt (4) lösbare Kupplungsmittel für eine Pulveraufnahmekapsel (7) umfasst, wobei die lösbaren Kupplungsmittel einen Sitz (40) zum Einführen eines Halses (73) der Kapsel (7) umfassen;
- einen freien Abschnitt (5a) einer Kanüle (5), der entlang der Hauptachse (X) von dem proximalen Endabschnitt (4) des Hauptarms hervorsteht, wodurch eine Einführanordnung luftdicht innerhalb der Kapsel bereitgestellt wird;
- wobei der Pneumatikkreis im Inneren der Kanüle (5) zwei konzentrische Kanäle in Bezug auf die Hauptachse (X) umfasst, davon einen äußeren Kanal (51) für den Einlass von Druckluft in die Kapsel (7), der zwischen einem inneren Kern (82) und einem äußeren Schaft (81) der Kanüle definiert ist, wobei der äußere Kanal (51) mit einem Anschlussstutzen (54) des Pneumatikkreises, der in dem sekundären Arm (2) bereitgestellt ist, der an dem Anschlussstück beginnt, durch mindestens einen in dem Schaft (81) ausgebildeten Durchgang (81b), in Kommunikation steht, und einen inneren Kanal (52) zum Ziehen des Luft/PulverGemischs aus der Kapsel, der intern zu dem inneren Kern (82) definiert ist, wobei der Pneumatikkreis im Inneren der Kanüle konfiguriert ist, um Druckluft in die Kapsel auszustoßen, um darin eine Verwirbelung zu erzeugen, die das Vermischen von Luft und Pulver ermöglicht und das Gemisch aus Luft und Pulver zu der Düse hin zu befördern; wobei
- der Schaft (81) eine kürzere axiale Erstreckung in Bezug auf den Kern (82) aufweist, wodurch der Kern (82) für ein freies Endsegment (82a) freigelegt ist, wobei das Segment (82a) eine Vielzahl von Öffnungen (65) zur Kommunikation zwischen der Kapsel und dem inneren Kanal (52) umfasst, wobei der Schaft (81) an seiner Wand ein oder mehrere Luftauslasslöcher (64) für Luft aus dem äußeren Kanal (51) umfasst, die in einem Bereich ausgebildet sind, der dem freien Abschnitt (5a) der Kanüle (5) entspricht; und wobei
- die lösbaren Kupplungsmittel Verriegelungsmittel (21, 22) für den Hals (73) der Kapsel (7) umfassen, die dazu geeignet sind, durch manuellen Eingriff eines Bedieners gelöst zu werden, wobei die Verriegelungsmittel (21, 22) mindestens ein Verriegelungselement umfassen, das radial innerhalb des Sitzes (40) des proximalen Endabschnitts des Hauptarms bewegbar ist, dazu geeignet, in Bezug auf den Hals (73) in Eingriff und außer Eingriff gebracht zu werden, um die Kapsel axial in einer Verriegelungs- oder Schließposition zu halten, und ihre Einführ- und Herausziehbewegung in einer offenen oder Löseposition zu ermöglichen.

2. Vorrichtung nach einem des Anspruchs 1, wobei der innere Kern (82) in Bezug auf den Hauptarm befestigt ist und der äußere Schaft (81) drehbar um die Hauptachse gestützt ist, wobei die lösbaren Kupplungsmittel ferner Übertragungsmittel umfassen, die dazu geeignet sind, den Schaft (81) einstückig mit der Kapsel (7) zu drehen, wobei die Vorrichtung ferner eine innere röhrenförmige Struktur (61) umfasst, die innerhalb des Hauptgehäusearms befestigt ist, die innerhalb eines Durchgangs (109) untergebracht ist, der den Sitz (40) axial, mit reduzierter Abschnittsbreite, zu dem distalen Endabschnitt hin verlängert, wobei sich der Schaft (81) teilweise innerhalb des Durchgangs (109) erstreckt, beginnend an der inneren röhrenförmigen Struktur (61), mit der er drehbar in Eingriff steht, wobei die innere röhrenförmige Struktur (61) in Zusammenwirkung mit einer Wand des Durchgangs (109) eine ringförmige Verteilungskammer (63) definiert, wobei die Kammer (63) in Kommunikation mit dem Anschlussstutzen (54) steht und eine Vielzahl von radialen Einlassöffnungen (62) umfasst, die ausgelegt sind, um den Durchtritt von Luft von der Kammer (63) zu dem äußeren Kanal (51) zu ermöglichen, wenn der Einlassdurchgang (81b) des Schafts (81) infolge der Drehung des Schafts in Übereinstimmung mit mindestens einer der Öffnungen (62) steht, wobei die Drehung des Schafts, die durch die Kapsel ausgeübt wird, dazu ausgelegt ist, den Luftstrom, der aus dem Anschlussstutzen (54) durch den mindestens einen Durchgang (81b) aufgenommen wurde, aufzuteilen.

3. Vorrichtung nach Anspruch 2, wobei das mindestens eine Verriegelungselement zwei Ringe (21, 22) umfasst, die radial auf jeweiligen Gleitebenen orthogonal zu der Hauptachse (X) gleiten, wobei die Ringe in der offenen und der geschlossenen Position in Bezug auf die Hauptachse (X) jeweils in größerem bzw. geringerem Ausmaß radial verschoben sind, wobei jeder Ring eine halbkreisförmige Struktur, die auf der relativen Gleitebene liegt, und einen Betätigungsknopf aufweist, der eine Oberfläche aufweist, die durch ein Fenster (28), das den Hauptarm auf der Höhe des Sitzes (40) seitlich durchbricht, freigelegt ist, wobei die zwei Ringe eine gespiegelte Anordnung in Bezug auf eine Ebene, die durch die Hauptachse (X) verläuft, aufweisen, sodass die zwei Betätigungsknöpfe des Paares Ringe einander gegenüberliegen, und ebenfalls Endabschnitte der halbkreisförmigen Struktur einander gegenüberliegen, um die Verriegelungswirkung auszuführen, indem ein Teil ihrer Länge in eine Nut (78), die in dem Hals (73) der Kapsel (7) ausgebildet ist, eingeführt wird, wobei die Ringe ferner mit elastischen Mitteln versehen sind, die dazu ausgelegt sind, bei Fehlen einer Betätigung die Verschiebung der Ringe zu der geschlossenen Position hin zu erreichen.

4. Vorrichtung nach Anspruch 3, wobei jeweilige Zähne (21b, 22b) in zueinander inversen axialen Richtungen von den halbkreisförmigen Strukturen (21c, 22c) hervorstehen, um innerhalb der Nut (78) aufgenommen zu werden, wodurch die Stabilität und Festigkeit der durch die Ringe bereitgestellten Verriegelung verbessert wird.

5. Vorrichtung nach Anspruch 2, wobei die Übertragungsmittel ein hohles Übertragungselement (30) umfassen, das umlaufend um die Hauptachse (X) innerhalb des Sitzes (40) und um die Kanüle (5) herum angeordnet ist, wobei das Übertragungselement (30) an einem proximalen Ende ein proximales Endprofil (31) aufweist, das dazu ausgelegt ist, mit einer an dem Hals (73) der Kapsel bereitgestellten konjugierten Endkonformation in Eingriff zu stehen, und an einem distalen Ende eine Vielzahl von Zähnen (32), die mit einem konjugierten gezahnten Profil (81f) in Eingriff stehen, das in einer Außenoberfläche des Schafts (81) ausgebildet ist.

6. Vorrichtung nach Anspruch 5, wobei das proximale Endprofil (31) des Übertragungselements (30) ein Profil mit quadratischen Einbuchtungen ist.

7. Vorrichtung nach Anspruch 5, wobei dem Übertragungselement (31) an einer Vielzahl von diskreten Winkelpositionen Drehverhinderungsmittel zugeordnet sind, wobei die Drehverhinderungsmittel in der Lage sind, bei Erreichen der Positionen eine taktile sensorische Reaktion bereitzustellen, wobei die Positionen inkrementellen Variationen der Strömungsrate der in den äußeren Kanal (51) eintretenden Luft entsprechen.

8. Vorrichtung nach Anspruch 7, umfassend einen Führungskäfig (41) für die Verriegelungsmittel, wobei der Käfig (41) eine Hohlzylinderform aufweist und innerhalb des Sitzes (40) koaxial befestigt ist, wobei das Übertragungselement (30) an dem distalen Ende einen scheibenförmigen Flansch (33) umfasst, der an einer proximalen Fläche davon eine ringähnliche Buchse (90) in Drehung versetzt, wobei die Buchse (90) eine Gleiterformation (91) umfasst, die in eine Hubbegrenzungsführung (41c) eingesetzt ist, die in einer distalen Fläche (41e) des Käfigs (41) ausgebildet ist, wobei die Drehverhinderungsmittel eine Vielzahl von Hohlräumen (41d) umfassen, die über der Umfangsoberfläche der distalen Fläche (41e) des Käfigs (41) angeordnet sind, die dazu ausgelegt sind, selektiv mit einem Vorsprung gekoppelt zu werden, der sich von der Buchse (90) hervorwölbt.

9. Vorrichtung nach Anspruch 8, ferner umfassend, zwischen dem Flansch (33) und der Buchse (90), ein Schubelement mit elastischem Ansprechverhalten (68), das dazu ausgelegt ist, die Buchse (90) gegen den Käfig (41) zu schieben, wodurch der Eingriff des Vorsprungs in einem der Hohlräume (41d) gefördert und stabilisiert wird.

10. Vorrichtung nach einem der vorstehenden Ansprüche, umfassend eine Ummantelungshülse (9) aus einem rutschhemmenden Material wie Silikon, die, vorzugsweise reversibel, mindestens an einer Verbindungsstelle zwischen dem Hauptarm (1) und dem sekundären Arm (2) angeordnet ist.

11. Kapsel (7) zum Aufnehmen von Schleifpulver, umfassend lösbare Kupplungsmittel (72), die komplementär zu den lösbaren Kupplungsmitteln des Hauptarms der Zahnreinigungsvorrichtung nach einem der vorstehenden Ansprüche sind, wobei die Kapsel einen Körper (71) umfasst, der einen Hohlraum (70) definiert, und einen röhrenförmigen Hals (73), der von dem Körper (71) gemäß einer Halsachse (X') hervorsteht, wobei die lösbaren Kupplungsmittel (72) der Kapsel in dem Hals ausgebildet sind, der mit einer Mündung endet, die dazu ausgelegt ist, den Hohlraum (70) in Kommunikation mit der Außenseite zu bringen, wobei der Hals (73) dazu ausgelegt ist, an dem proximalen Endabschnitt des Hauptarms mit koaxialer Kupplung, d. h. indem die Halsachse (X') mit der Hauptachse (X) des Hauptarms (1) zusammenfallend gemacht wird, in den Sitz (40) eingeführt zu werden, wobei der freie Abschnitt (5a) der Kanüle (5) den Hals (73) durch die Mündung durchdringt, wobei die Kapsel auch eine röhrenförmige luftdichte Elastomer-Dichtmanschette (77) umfasst, die durch mechanische Interferenz mit der Innenoberfläche des Halses (73) der Kapsel (7) eingeführt ist, wobei die lösbaren Kupplungsmittel der Kapsel eine Nut (78) umfassen, die in Umfangsrichtung in einer Außenoberfläche des Halses (73) ausgebildet ist, die dazu ausgelegt ist, von den lösbaren Kupplungsmitteln der Vorrichtung in Eingriff genommen zu werden.

## Revendications

1. Dispositif de poudre de nettoyage destiné à être utilisé dans une pratique dentaire, comprenant :
- un bras de carter principal (1), allongé le long d'un axe longitudinal principal (X) et comprenant une partie d'extrémité distale, conçue en tant que buse (3) pour distribuer un mélange d'air et de poudre abrasive, et une partie d'extrémité proximale (4) axialement opposée à ladite partie d'extrémité distale ;
- un bras de carter secondaire (2), allongé le long d'un axe longitudinal secondaire (Y), incident par rapport audit axe principal (X) et conçu en tant qu'élément de liaison (20) à une source d'air comprimé ;
- un circuit pneumatique formé dans lesdits bras primaire (1) et secondaire (2) entre ledit élément de liaison (20) et ladite buse (3) ;
dans lequel
- ledit bras principal (1) comprend, sur ladite partie d'extrémité proximale (4), un moyen d'accouplement libérable pour une capsule de confinement de poudre (7), ledit moyen d'accouplement libérable comprenant un siège (40) pour l'insertion d'un col (73) de ladite capsule (7) ;
- une partie libre (5a) d'une canule (5), faisant saillie le long dudit axe principal (X) depuis ladite partie d'extrémité proximale (4) dudit bras principal, fournissant un agencement d'insertion de manière étanche à l'intérieur de ladite capsule ;
- ledit circuit pneumatique comprenant, à l'intérieur de ladite canule (5), deux canaux concentriques par rapport audit axe principal (X), dont un canal externe (51) pour l'entrée d'air comprimé dans ladite capsule (7), défini entre un noyau interne (82) et un arbre externe (81) de ladite canule, ledit canal externe (51) étant en communication avec une branche d'élément de liaison (54) dudit circuit pneumatique prévu dans ledit bras secondaire (2) à partir dudit élément de liaison, à travers au moins un passage (81b) formé dans ledit arbre (81), et un canal interne (52) pour aspirer le mélange air/poudre depuis la capsule, défini à l'intérieur dudit noyau interne (82), moyennant quoi ledit circuit pneumatique est conçu à l'intérieur de ladite canule pour éjecter de l'air comprimé dans la capsule, pour y créer une turbulence permettant le mélange d'air et de poudre, et pour transporter ledit mélange d'air et de poudre vers ladite buse ; dans lequel
- ledit arbre (81) a une extension axiale plus courte par rapport audit noyau (82), laissant ledit noyau (82) exposé pour un segment d'extrémité libre (82a), ledit segment (82a) comprenant une pluralité d'orifices (65) pour la communication entre ladite capsule et ledit canal interne (52), ledit arbre (81) comprenant sur sa paroi un ou plusieurs trous de sortie d'air (64) d'air dudit canal externe (51), formés dans une région correspondant à ladite partie libre (5a) de la canule (5), et dans lequel
- ledit moyen d'accouplement libérable comprenant un moyen de verrouillage (21, 22) pour ledit col (73) de ladite capsule (7), apte à être libéré par une intervention manuelle d'un opérateur, ledit moyen de verrouillage (21, 22) comprenant au moins un organe de verrouillage mobile radialement à l'intérieur dudit siège (40) de ladite partie d'extrémité proximale dudit bras principal, apte à être mis en prise et désolidarisé par rapport audit col (73) afin de retenir axialement la capsule dans une position de verrouillage ou de fermeture, et pour permettre son mouvement d'insertion et d'extraction, en position ouverte ou de libération.

2. Dispositif selon l'une quelconque de la revendication 1, dans lequel ledit noyau interne (82) est fixe par rapport audit bras principal, et ledit arbre externe (81) est supporté de manière rotative autour dudit axe principal, ledit moyen d'accouplement libérable comprenant en outre un moyen de transmission apte pour faire tourner ledit arbre (81) d'un seul tenant avec ladite capsule (7), ledit dispositif comprenant en outre une structure tubulaire interne (61) fixée à l'intérieur dudit bras de carter principal, logée à l'intérieur d'un passage (109) qui prolonge axialement, avec une largeur de section réduite, ledit siège (40) vers ladite partie d'extrémité distale, ledit arbre (81) s'étendant partiellement à l'intérieur dudit passage (109), à partir de ladite structure tubulaire interne (61), avec laquelle il est en prise de manière rotative, ladite structure tubulaire interne (61) définissant, en coopération avec une paroi dudit passage (109), une chambre de distribution annulaire (63), ladite chambre (63) étant en communication avec ladite branche d'élément de liaison (54) et comprenant une pluralité d'ouvertures d'admission radiales (62) adaptées pour permettre le passage d'air de ladite chambre (63) vers ledit canal externe (51) lorsque ledit passage d'entrée (81b) dudit arbre (81) est en correspondance avec au moins l'une parmi lesdites ouvertures (62) suite à la rotation de l'arbre, moyennant quoi la rotation dudit arbre, transmise par ladite capsule est adaptée pour diviser le flux d'air reçu de ladite branche d'élément de liaison (54) à travers ledit au moins un passage (81b).

3. Dispositif selon la revendication 2, dans lequel ledit au moins un organe de verrouillage comprend deux bagues (21, 22) coulissant radialement sur des plans de coulissement respectifs orthogonaux audit axe principal (X), dans lesdites positions ouverte et fermée lesdites bagues étant déplacées radialement, respectivement, plus et moins étendue par rapport audit axe principal (X), chaque bague comprenant une structure semi-circulaire se trouvant sur le plan de coulissement relatif et un bouton d'actionnement ayant une surface exposée à travers une fenêtre (28) qui rompt latéralement ledit bras principal au niveau de la hauteur dudit siège (40), les deux bagues présentant un agencement en miroir par rapport à un plan passant par ledit axe principal (X), de sorte que les deux boutons d'actionnement de la paire de bagues sont en vis-à-vis, et, également, des parties d'extrémité de la structure semi-circulaire sont en vis-à-vis pour effectuer l'action de verrouillage en insérant une partie de leur longueur à l'intérieur d'une rainure (78) formée dans ledit col (73) de ladite capsule (7), lesdites bagues étant en outre pourvues d'un moyen élastique adapté pour réaliser, en l'absence d'actionnement, le déplacement des bagues dans ladite position fermée.

4. Dispositif selon la revendication 3, dans lequel des dents respectives (21b, 22b) font saillie, dans des directions axiales mutuellement inverses, depuis lesdites structures semi-circulaires (21c, 22c), pour se loger à l'intérieur de ladite rainure (78), améliorant ainsi la stabilité et la fermeté du verrouillage fourni par les bagues.

5. Dispositif selon la revendication 2, dans lequel ledit moyen de transmission comprend un organe de transmission (30) creux agencé de manière rotative autour dudit axe principal (X) à l'intérieur dudit siège (40) et autour de ladite canule (5), ledit organe de transmission (30) ayant, au niveau d'une extrémité proximale, un profil d'extrémité proximale (31) adapté pour être en prise avec une conformation d'extrémité conjuguée prévue sur ledit col (73) de ladite capsule, et au niveau d'une extrémité distale, une pluralité de dents (32) venant en prise avec un profil denté conjugué (81f) formé dans une surface externe dudit arbre (81).

6. Dispositif selon la revendication 5, dans lequel ledit profil d'extrémité proximale (31) dudit organe de transmission (30) est un profil avec des indentations carrées.

7. Dispositif selon la revendication 5, dans lequel un moyen de blocage de rotation est associé audit organe de transmission (31) au niveau d'une pluralité de positions angulaires discrètes, ledit moyen de blocage de rotation étant apte à offrir une réponse sensorielle tactile à l'atteinte desdites positions, lesdites positions correspondant à des variations incrémentales du débit d'air entrant dans ledit canal externe (51).

8. Dispositif selon la revendication 7, comprenant une cage de guidage (41) pour ledit moyen de verrouillage, ladite cage (41) ayant une forme cylindrique creuse et étant fixée coaxialement à l'intérieur dudit siège (40), dans lequel ledit organe de transmission (30) comprend, au niveau de ladite extrémité distale, une bride en forme de disque (33) amenant en rotation, sur une face proximale de celle-ci, une douille annulaire (90), ladite douille (90) comprenant une formation de curseur (91), insérée dans un guide de limitation de course (41c) formé dans une face distale (41e) de ladite cage (41), ledit moyen de blocage de rotation comprenant une pluralité de cavités (41d) agencées sur la surface circonférentielle de ladite face distale (41e) de ladite cage (41), adaptées pour être accouplées sélectivement à une saillie renflée à partir de ladite douille (90).

9. Dispositif selon la revendication 8, comprenant en outre, entre ladite bride (33) et ladite douille (90), un organe de poussée de réponse élastique (68) adapté pour pousser ladite douille (90) contre ladite cage (41), favorisant et stabilisant la mise en prise de ladite saillie dans l'une desdites cavités (41d).

10. Dispositif selon l'une quelconque des revendications précédentes, comprenant une gaine de revêtement (9) constituée d'un matériau anti-dérapant tel que du silicone agencé, de préférence de manière réversible, au moins au niveau d'une articulation entre ledit bras principal (1) et ledit bras secondaire (2).

11. Capsule (7) destinée à contenir une poudre abrasive, comprenant un moyen d'accouplement libérable (72) complémentaire audit moyen d'accouplement libérable dudit bras principal du dispositif de nettoyage dentaire selon l'une quelconque des revendications précédentes, ladite capsule comprenant un corps (71), définissant une cavité (70), et un col tubulaire (73) faisant saillie depuis ledit corps (71) selon un axe de col (X'), ledit moyen d'accouplement libérable de capsule (72) étant formé dans ledit col, dont l'extrémité est dotée d'une embouchure adaptée pour mettre ladite cavité (70) en communication avec l'extérieur, ledit col (73) étant adapté pour être inséré à l'intérieur dudit siège (40) au niveau de ladite partie d'extrémité proximale dudit bras principal avec un accouplement coaxial, c'est-à-dire en faisant coïncider ledit axe de col (X') avec ledit axe principal (X) dudit bras principal (1), ladite partie libre (5a) de ladite canule (5) pénétrant ledit col (73) à travers ladite embouchure, dans lequel la capsule comprend également un manchon d'étanchéité à l'air élastomère tubulaire (77), inséré par interférence mécanique sur la surface interne dudit col (73) de la capsule (7), dans lequel ledit moyen d'accouplement libérable de capsule comprend une rainure (78) formée circonférentiellement dans une surface externe dudit col (73), adaptée pour être mise en prise par ledit moyen d'accouplement libérable dudit dispositif.
